# EUROPEAN PATENT APPLICATION

(11) **EP 2 306 779 A1**
(43) Date of publication of application: **06.04.2011**
(21) Application number: 09360043.5
(22) Date of filing: 05.10.2009
(51) Int. Cl.: H04W 52/34, H04W 72/12

(54) **Power allocation**

(71) Applicant: Alcatel Lucent, 75008 Paris (FR)
(72) Inventor: Wong, Shin Horng, Wiltshire SN14 0SP (GB)
(74) Representative: Leppard, Andrew John

(57) **Abstract**

A method of allocating power to a data channel in a multi-carrier wireless telecommunications network, a network apparatus and a computer program product are disclosed. Each carrier comprises at least one of said data channels and the method comprises the steps of: determining power available for allocation between each of said carriers; receiving an indication representative of an estimated power requirement associated with sending data on said at least one data channel of each carrier; receiving an indication representative of an estimated data throughput associated with sending data on said at least one data channel of each carrier; generating a value representative of an estimated potential throughput of data per unit of power allocated to said at least one data channel of each carrier from a ratio of said estimated data throughput to said estimated power requirement for said at least one data channel of each carrier; and determining a power allocation for said at least data channel of each carrier by dividing said power available across said at least data channel of each carrier in proportion to said value for that carrier. The generated value takes into account both power "cost" and the potential data throughput possible on a data channel of a carrier, thereby offering an indication of "value" or "efficiency" that may be achieved in allocating some or all of the available power to a particular carrier. By determining the power allocation for each carrier by dividing, spreading or distributing the available power across each carrier in proportion to the value representative of the estimated potential throughput per unit of power allocated for each carrier ensures that the network does not become inadvertently imbalanced since each data carrier may be allocated power to support data transmissions. By dividing the power allocation in proportion to the value representative of the estimated potential throughput of data per unit of power allocated also helps to ensure that those carriers which support data transmission more efficiently are allocated power in preference to those which support data transmissions less efficiently. However, by still utilising the less efficient carriers overall balance of the network is maintained.

## Description

### FIELD OF THE INVENTION

The present invention relates to a method of allocating power to a data channel in a multi-carrier wireless telecommunications network, a network apparatus and a computer program product.

### BACKGROUND

Wireless telecommunications systems are known. In a cellular system, radio coverage is provided to user equipment, for example, mobile telephones, by areas known as cells. A base station is located in each cell to provide the radio coverage. User equipment in each cell receives information and data from the base station and transmits information and data to the base station.

Information and data transmitted by the base station to the user equipment occurs on channels of radio carriers known as downlink carriers. Information and data transmitted by user equipment to the base station occurs on uplink data channels of radio carriers known as uplink carriers.

In known single uplink carrier wireless telecommunications systems, user equipment transmits data to the base station in packets. User equipment selects a packet data transport block size to send on a channel of an uplink carrier in accordance with: resources scheduled by the base station to that user equipment and available user equipment data transmission power. User equipment data transmission power is determined by the availability of power after assessment of power pre-allocated to other functions of the user equipment.

It is proposed to allow user equipment to transmit on more than one carrier. User equipment may therefore be required to share limited available user equipment power between carriers to transmit data on those carriers.

Accordingly, it is desired to provide an improved technique for allocating available power between data uplink channels in a multi-carrier wireless telecommunications network.

### SUMMARY

According to a first aspect, there is provided a method of allocating power to a data channel in a multi-carrier wireless telecommunications network, each carrier comprising at least one of the data channels, the method comprising the steps of: determining power available for allocation between each of the carriers; receiving an indication representative of an estimated power requirement associated with sending data on the at least one data channel of each carrier; receiving an indication representative of an estimated data throughput associated with sending data on the at least one data channel of each carrier; generating a value representative of an estimated potential throughput of data per unit of power allocated to the at least one data channel of each carrier from a ratio of the estimated data throughput to the estimated power requirement for the at least one data channel of each carrier; and determining a power allocation for the at least data channel of each carrier by dividing the power available across the at least data channel of each carrier in proportion to the value for that carrier.

The first aspect recognises that in a wireless telecommunications network it is possible to increase uplink data throughput by allowing user equipment to transmit on two or more carriers. A wireless telecommunications network allowing for user equipment to transmit on two or more carriers is known as a "multi-carrier" network. In such a multi-carrier wireless telecommunications network it is likely that user equipment will be required to share a single power source between the two or more carriers.

Such multi-carrier wireless telecommunications networks may provide two carriers, and may be referred to as a 'Dual Cell High Speed Uplink Packet Access' (DC-HSUPA) network. Networks having more than two carriers may be referred to as 'Multi Cell High Speed Uplink Packet Access' (MC-HSUPA) networks. The term 'multi-carrier network' used herein is envisaged to cover both DC-HSUPA and MC-HSUPA networks.

Typically, each carrier in a multi-carrier network will be independently power controlled. Furthermore, each carrier will typically experience different radio condition and will have different resources scheduled by a base station. The radio condition experienced by a carrier tends to be indicative of any environmental advantages being experienced by a radio signal having that particular carrier frequency. Resources scheduled by a base station to a particular carrier offer some indication of the status of broader conditions being experienced by the wireless telecommunications network on that carrier in a particular cell.

In order for a multi-carrier wireless telecommunications network to function efficiently, it is necessary to consider how best to allocate limited available transmit power amongst carriers. As described previously, the available user equipment transmit power is typically limited and it may be desirable in other network apparatus such as base stations to limit transmit power for cost or energy efficiency reasons.

In particular, it is necessary to try to ensure efficient data throughput from user equipment to the base station is achieved. In arrangements where limited power is available and power demands of all available carriers provided on a piece of user equipment cannot be met, it will be necessary to determine how best to allocate the limited available transmit power between the carriers to achieve efficient data throughput to the base station.

The first aspect is particularly relevant to allocation of available transmit power to physical data uplink channels in a multi-carrier wireless telecommunications network.

Allocation of available power in accordance with the method of the first aspect aims to ensure that power is allocated to a carrier in accordance with an estimate of potential throughput of data per unit of power allocated to the data channel of that carrier. Such an approach can improve total data throughput achieved in a cell, or a sector by a base station.

It is possible to allocate available power to each carrier based only on an indication representative of an estimated power requirement associated with sending data on the data channel of that carrier. Such a method assumes that, because the power "cost" of sending data on a data channel of that carrier is low, it is likely to be the best choice of carrier on which to send data to a base station. Such an approach may work well in multi-carrier wireless communication networks in which data traffic is equally balanced across all carriers, but in the event that the network is unbalanced, may lead to an overall drop in data throughput. An unbalanced network is one in which the majority of data traffic in a network cell served by a base station occurs on one carrier. In such a case, many items of user equipment all transmit data to the base station on the data channel of one carrier. As a result, signal to noise ratio on that heavily loaded carrier is likely to drop across the network cell and the potential data throughput associated with sending data to the base station on the data channel of that carrier also drops.

In other words, using a "cost" method does not work well in an unbalanced network because in an unbalanced network, a carrier having the lowest Target Noise Rise (or noise level tolerance) would result in all user equipment needing a low power on that carrier to overcome the noise level. Given a pilot channel (also known as a 'Dedicated Physical Control Channel' or DPCCH) is power controlled to a target Signal to Noise Ratio, and the noise level is low in this carrier, the pilot would need less power for it to get through to a base station. For a carrier with high Target Noise Rise, a pilot needs to transmit at a higher power to get through to the base station. Since the "cost" based method selects the carrier with the lowest pilot power, this carrier (with the lowest Target Noise Rise) will more likely to be selected to be given a higher proportion of power than the other carriers. Giving as much power as possible to first chosen carrier results in that carrier (the one with the lowest Target Noise Rise) being allocated lots of available transmit power. If this is done by all user equipment this would lead to high noise rise at the base station. In order to maintain a low target Noise Rise the base station reduces the "grants" to each user equipment. The "Serving Grant" to each user equipment reduces in order for the base station to maintain its low target Noise Rise. Since "serving grant" represents the throughput, reducing "serving grant" reduces overall cell throughput. Since, in this method, most power is given to the lowest transmit pilot carrier (i.e. likely the one with the lowest target Noise Rise), the other carriers are allocated less power even though they may have a high "serving grant". This results in overall drop in sector throughput.

In contrast, an allocation method in accordance with the first aspect recognises that receiving an indication representative of an estimated power requirement associated with sending data on the data channel of that carrier; and receiving an indication representative of an estimated data throughput associated with sending data on the data channel of that carrier; allows the generation of a value, for the data channel of that carrier, representative of an estimated potential throughput of data per unit of power allocated to the data channel of that carrier. That generated value takes into account both power "cost" and the potential data throughput possible on a data channel of a carrier, thereby offering an indication of "value" or "efficiency" that may be achieved in allocating some or all of the available power to a particular carrier.

In receiving an indication representative of an estimated power requirement associated with sending data on the data channel of that carrier, it may be that the indication is determined from information previously known, derived, determined or received.

It will be appreciated that the power allocatable between the carriers may not be sufficient to meet the needs of all of the carriers. Taking into account the estimated potential throughput of data per unit of power allocated to the data channel of each carrier aims to ensure that the limited available power is allocated in a way that aims to maximise data throughput.

Also, by determining the power allocation for each carrier by dividing, spreading or distributing the available power across each carrier in proportion to the value representative of the estimated potential throughput per unit of power allocated for each carrier ensures that the network does not become inadvertently unbalanced since each data carrier may be allocated power to support data transmissions. By dividing the power allocation in proportion to the value representative of the estimated potential throughput of data per unit of power allocated also helps to ensure that those carriers which support data transmission more efficiently are allocated power in preference to those which support data transmissions less efficiently. However, by still utilising the less efficient carriers overall balance of the network is maintained.

In one embodiment, the step of determining comprises: determining the power allocation for the at least one data channel of each carrier by dividing the power available across the at least one data channel of every carrier in direct proportion to the value for that carrier so that carriers having a value representative of a higher estimated potential throughput of data per unit of power allocated have a power allocation which is a greater proportion of the power available than carriers having a value representative of a lower estimated potential throughput of data per unit of power allocated. Accordingly, the available power may be spread or distributed across every available carrier supported by, for example, a network apparatus. As mentioned above, distributing the power across every available carrier helps to ensure that network balance is maintained. Also, by spreading the available power in direct proportion to the value helps to ensure that more power is allocated to the most efficient carriers than is allocated to those less efficient carriers.

In one embodiment, the power available comprises a total power output transmittable by a wireless transmission apparatus. Accordingly, the power available may represent to the total power output which is transmittable by a network apparatus. For example, a network apparatus, such as user equipment, may be operable to support a maximum transmission power output which is around 250 milliwatts (although this could be much higher for a base station or a repeater). This total transmission power may then be allocable across each of the supported carriers.

In one embodiment, the method comprises the step of: adjusting the power allocation for the at least one data channel of each carrier when the power allocation for the at least one data channel of that carrier is less than that a pre-allocated power which is already allocated to other channels of that carrier. Accordingly, it may be that the power allocation for a particular carrier is determined to be less than an already allocated amount of power for that carrier. For example, the carrier may already have power allocated for supporting other channels such as control channels and that pre-allocated power may be more than the determined power allocation for that carrier. Accordingly, the power allocation for the data channel may be adjusted to take account of the pre-allocation of power.

In one embodiment, the step of adjusting comprises: reducing the pre-allocated power of that carrier. Accordingly, the power which is already pre-allocated may be scaled-down in order to ensure that the total available power is not exceeded.

In one embodiment, the step of adjusting comprises: reducing the power allocation of the at least one data channel of at least one carrier whose power allocation exceeds the pre-allocated power of that carrier; and increasing the power allocation the at least one data channel of each carrier whose power allocation is less than the pre-allocated power of that carrier. A problem with the scaling-down of the pre-allocated power mentioned above may be that transmissions on those carrier channels may no longer be received by other apparatus within the telecommunications network. Instead, the power allocated to one or more carriers whose power allocation exceeds the pre-allocation amount (and so have a surplus of power) may be reduced in order to free-up power to be utilised by those carriers allocated less than the pre-allocated amount. In this way, the pre-allocated amount does not need to be scaled-down but instead power is taken from carriers having a power surplus, which ensures that the total available power is not exceeded.

In one embodiment, the step of adjusting comprises: determining a total power allocation shortfall, the total power allocation shortfall being, for each carrier whose power allocation is less than the pre-allocated power of that carrier, a sum of each difference between the power allocation and the pre-allocated power of that carrier; reducing the power allocation of the at least one data channel of at least one carrier whose power allocation exceeds the pre-allocated power of that carrier by a sum reduction amount which at least equals the total power allocation shortfall; and increasing the power allocation the at least data channel of each carrier whose power allocation is less than the pre-allocated power of that carrier to at least the pre-allocated power of that carrier. Accordingly, each of the carriers whose power allocation is less than the pre-allocated amount for that carrier may be identified. The amount of power allocation shortfall for each of those carriers is determined. The shortfall of each carrier is accumulated to give a total power shortfall. This total power shortfall gives an indication of the total power which needs to be freed-up from those carriers which operate at a power surplus. Those carriers operating in surplus have their power allocation reduced by at least the total power allocation shortfall amount. This frees-up the missing required power for the under-resourced carriers. This freed up power is then distributed to each of the under-resourced carriers to ensure that those carriers operate at at least the pre-allocated power level.

In one embodiment, the step of reducing comprises: reducing the power allocation of the at least one data channel of each carrier whose power allocation exceeds the pre-allocated power of that carrier based on a predetermined weighting of each carrier. Accordingly, a weighting system may be applied to ensure that power is taken from some carriers in preference to others.

In one embodiment, the weighting of each carrier is equal.

In one embodiment, the weighting of each carrier is based on the value for that carrier so that carriers having a value representative of a lower estimated potential throughput of data per unit of power allocated have a weighting which is higher than carriers having a value representative of a higher estimated potential throughput of data per unit of power allocated so that carriers having the value representative of the lower estimated potential throughput of data per unit of power have their power allocation reduced in preference to carriers having the value representative of the higher estimated potential throughput of data per unit of power. Accordingly, the weightings result in preference being given to reduce the power allocation of those carriers which are least efficient and reduces the likelihood of more efficient channels having their power allocation reduced to make up the power shortfall.

It will be appreciated that the adjustment of power allocation techniques to compensate for the power shortfall mentioned above may need to be performed iteratively until all carriers achieve at least their pre-allocated powers.

In one embodiment, the power available comprises an excess power available for transmitting user data over the data channels which is not already pre-allocated to other channels of each carrier. By this approach, it may become unnecessary to adjust the power allocations since only the additional or surplus power available for transmitting data is spread across the carriers. This helps to ensure that the pre-allocated power amounts remain unchanged and obviates the need to reduce or adjust the power allocation.

In one embodiment, each carrier comprises a pilot channel and the indication representative of an estimated power requirement associated with sending data on the data channel of that carrier is determined from a power level pre-allocated to the pilot channel. This pilot channel may be the Dedicated Physical Control Channel (DPCCH) and the indication representative of an estimated power requirement associated with sending data on the data channel of that carrier may be the transmission power of the DPCCH.

In one embodiment, the indication representative of an estimated data throughput associated with sending data on the at least one data channel of each carrier comprises a serving grant.

According to a second aspect, there is provided a network apparatus operable to allocate power to a data channel in a multi-carrier wireless telecommunications network, each carrier comprising at least one of the data channels, the apparatus comprising: source of power available for allocation between each of the carriers; monitoring logic operable to receive an indication representative of an estimated power requirement associated with sending data on the at least one data channel of each carrier and to receive an indication representative of an estimated data throughput associated with sending data on the at least one data channel of each carrier; calculation logic operable to generate a value representative of an estimated potential throughput of data per unit of power allocated to the at least one data channel of each carrier from a ratio of the estimated data throughput to the estimated power requirement for the at least one data channel of each carrier; and implementation logic operable to determine a power allocation for the at least data channel of each carrier by dividing the power available across the at least data channel of each carrier in proportion to the value for that carrier.

In one embodiment, the implementation logic is operable to determine the power allocation for the at least one data channel of each carrier by dividing the power available across the at least one data channel of every carrier in direct proportion to the value for that carrier so that carriers having a value representative of a higher estimated potential throughput of data per unit of power allocated have a power allocation which is a greater proportion of the power available than carriers having a value representative of a lower estimated potential throughput of data per unit of power allocated.

In one embodiment, the power available comprises a total power output transmittable by a wireless transmission apparatus.

In one embodiment, the implementation logic is operable to adjust the power allocation for the at least one data channel of each carrier when the power allocation for the at least one data channel of that carrier is less than that a pre-allocated power which is already allocated to other channels of that carrier.

In one embodiment, the implementation logic is operable to reduce the pre-allocated power of that carrier.

In one embodiment, the implementation logic is operable to reduce the power allocation of the at least one data channel of at least one carrier whose power allocation exceeds the pre-allocated power of that carrier, and to increase the power allocation the at least one data channel of each carrier whose power allocation is less than the pre-allocated power of that carrier.

In one embodiment, the implementation logic is operable to determine a total power allocation shortfall, the total power allocation shortfall being, for each carrier whose power allocation is less than the pre-allocated power of that carrier, a sum of each difference between the power allocation and the pre-allocated power of that carrier, to reduce the power allocation of the at least one data channel of at least one carrier whose power allocation exceeds the pre-allocated power of that carrier by a sum reduction amount which at least equals the total power allocation shortfall, and to increase the power allocation the at least data channel of each carrier whose power allocation is less than the pre-allocated power of that carrier to at least the pre-allocated power of that carrier.

In one embodiment, the implementation logic is operable to reduce the power allocation of the at least one data channel of each carrier whose power allocation exceeds the pre-allocated power of that carrier based on a predetermined weighting of each carrier.

In one embodiment, the weighting of each carrier is equal.

In one embodiment, the weighting of each carrier is based on the value for that carrier so that carriers having a value representative of a lower estimated potential throughput of data per unit of power allocated have a weighting which is higher than carriers having a value representative of a higher estimated potential throughput of data per unit of power allocated so that carriers having the value representative of the lower estimated potential throughput of data per unit of power have their power allocation reduced in preference to carriers having the value representative of the higher estimated potential throughput of data per unit of power.

In one embodiment, the power available comprises an excess power available for transmitting user data over the data channels which is not already pre-allocated to other channels of each carrier.

In one embodiment, each carrier comprises a pilot channel and the indication representative of an estimated power requirement associated with sending data on the data channel of that carrier is determined from a power level pre-allocated to the pilot channel.

In one embodiment, the indication representative of an estimated data throughput associated with sending data on the at least one data channel of each carrier comprises a serving grant.

According to a third aspect of the present invention, there is provided a computer program product operable, when executed on a computer, to perform the method steps of the first aspect.

Further particular and preferred aspects are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings, in which:
Figure 1 illustrates the main components of a telecommunications network according to one embodiment;
Figure 2 is a schematic representation of the main processing steps for establishment of data transmission between user equipment and a base station on an uplink data channel in a multi-carrier wireless telecommunications network;
Figure 3 illustrates an example performance of a fair sharing scheme;
Figure 4 illustrates an example performance of a power to fulfil serving grant scheme;
Figure 5 illustrates an example performance of a serving grant proportion scheme;
Figure 6 illustrates an example performance of an inverse transmit DPCCH power scheme;
Figure 7 is a flowchart showing schematically the main processing steps for allocating power to a data channel in a multi-carrier wireless telecommunications network;

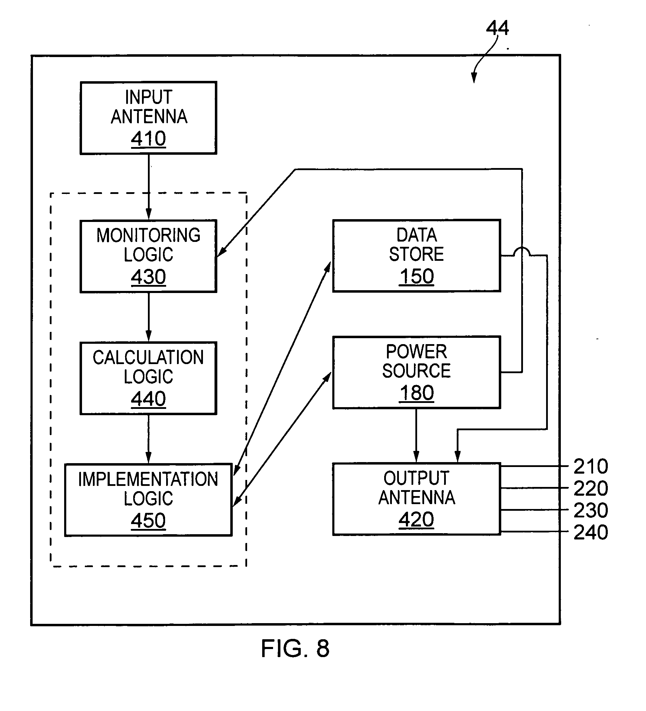

Figure 8 is a schematic representation of a user equipment including logic operable to carry out a method of allocating power to a data channel in a multi-carrier wireless telecommunications network in accordance with one aspect;
Figure 9 illustrates the performance of a power to fulfil serving grant scheme;
Figure 10 illustrates another example performance of a serving grant proportion scheme;
Figure 11 illustrates another example performance of an inverse transmit DPCCH power scheme;
Figure 12 illustrates an example performance of a technique according to one embodiment shown in Figure 7 which uses total transmission power; and
Figure 13 illustrates an example performance of a technique according to another embodiment shown in Figure 7 which uses additional transmission power.

### DESCRIPTION OF THE EMBODIMENTS

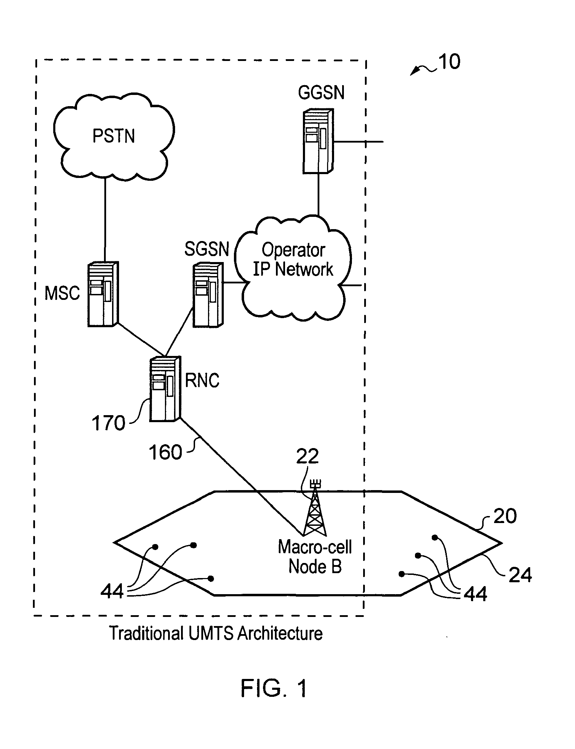

Figure 1 illustrates a wireless communication system, generally 10, according to one embodiment. User equipment 44 roam through the wireless communication system 10. Base stations 22 are provided which support respective macro cells 24. A number of such base stations are provided, which are distributed geographically in order to provide a wide area of coverage to the user equipment 44. When user equipment 44 is within a macro cell 24 supported by the base station 22 then communications may be established between the user equipment 44 and the base station 22 over an associated radio link. Each base station typically supports a number of sectors. Typically, a different antenna within a base station supports an associated sector. Accordingly, each base station has multiple antennas and signals sent through the different antennas are electronically weighted to provide a sectorised approach. Of course, it will be appreciated that Figure 1 illustrates a small subset of the total number of user equipment and base stations that may be present in a typical communications system.

The wireless communication system 10 is managed by a radio network controller 170. The radio network controller 170 controls the operation of the wireless communications system 10 by communicating with the base stations 22 over a backhaul communications link 160. The network controller 170 also communicates with the user equipment 44 via their respective radio links in order to efficiently manage the wireless communication system 10.

The radio network controller 170 maintains a neighbour list which includes information about the geographical relationship between cells supported by base stations. In addition, the radio network controller 170 maintains location information which provides information on the location of the user equipment within the wireless communications system 10. The radio network controller 170 is operable to route traffic via circuit-switched and packet-switched networks. Hence, a mobile switching centre 250 is provided with which the radio network controller 170 may communicate. The mobile switching centre 250 then communicates with a circuit-switched network such as a public switched telephone network (PSTN) 210. Likewise, the network controller 170 communicates with service general packet radio service support nodes (SGSNs) 220 and a gateway general packet radio support node (GGSN) 180. The GGSN then communicates with a packet-switch core 190 such as, for example, the Internet.

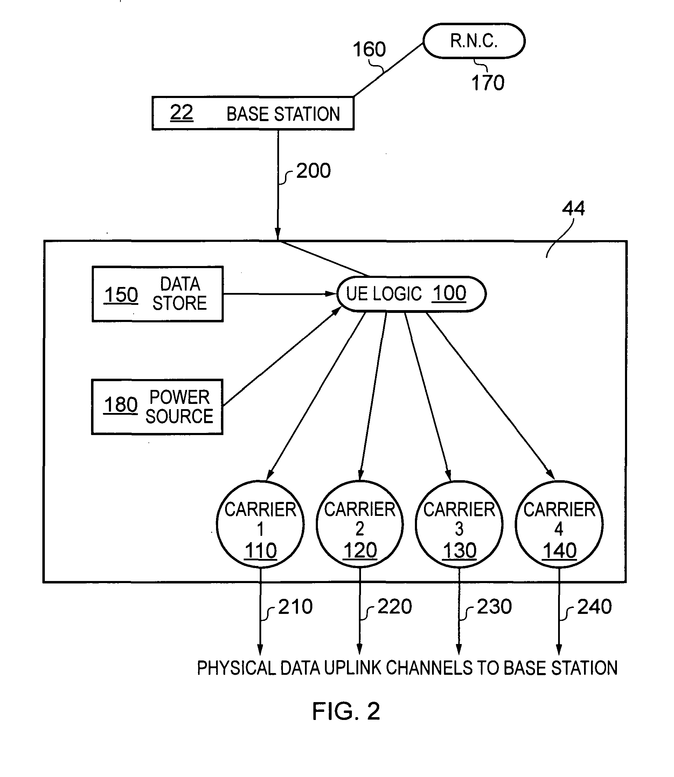

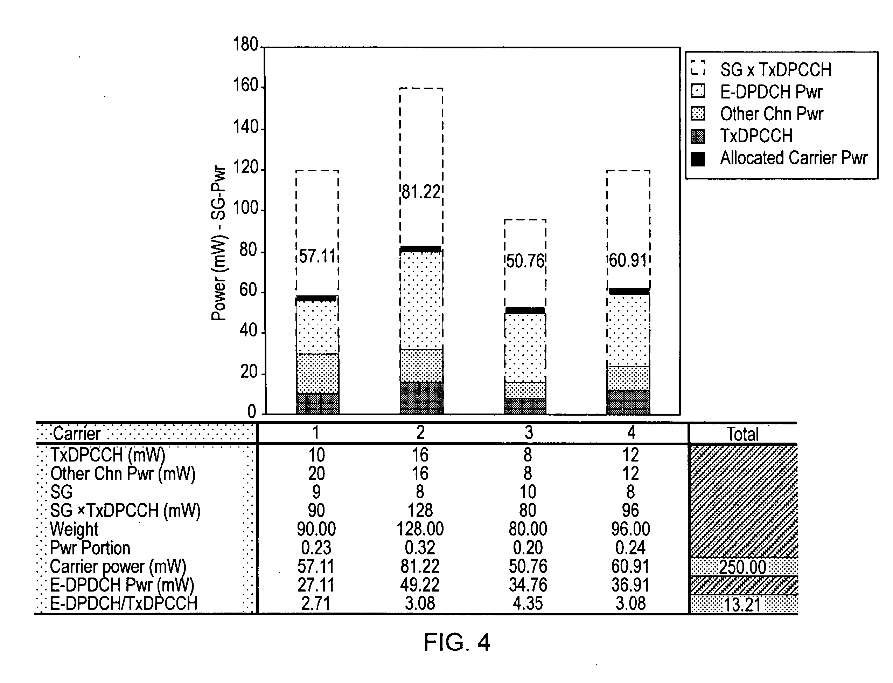

Figure 2 shows in more detail a schematic representation of the main elements of user equipment 44 and a base station 22 for establishment of data transmission on an uplink data channel in a multi-carrier wireless telecommunications network. The user equipment 44 comprises generally: controller logic 100; four carriers 110, 120, 130 and 140; a data store 150; and a power source 180. The controller logic 100 is described in more detail below in relation to Figure 4.

Each carrier 110, 120, 130, 140 comprises a number of channels including a pilot channel and a physical data channel. The physical data channel of each carrier is used to transmit data to the base station 22.

The data store 150 contains data to be sent to the base station 22 on the physical data channels of each of the carriers. The power source 180 supplies power to allow the user equipment 44 to function. A portion of power available from the power source 180 is allocatable to the carriers for transmission of data on their data channels. Uplink data channels 210, 220, 230, 240 allow data to be transmitted from user equipment 44 to the base station 22.

As described above, the radio network controller 170 controls the operation of the wireless communications system 10 by communicating with the base station 22 over a backhaul communications link 160. The network controller 170 also communicates indirectly with the user equipment 44 via a radio link 200 from the base station 22. The base station thus cooperates with the network controller and user equipment in order to efficiently manage the wireless communication system 10.

The general, operation of the carriers 110, 120, 130, 140 of user equipment 44 is controlled by the user equipment controller logic 100 based upon information and signals received from base station 22. The pilot channel of each carrier acts as a dedicated physical control channel and is necessary to maintain contact between user equipment 44 and base station 22. The power allocated to the pilot channel of each carrier is determined by the user equipment controller logic 100 based on information received from the base station via radio link 200. The control process between user equipment 44 and a base station 22 sets the level of overall power allocated to the pilot channel of each carrier is known as "inner loop" power control. The inner loop power control pre-allocates power from power source 180 to each carrier. The power level pre-allocated to each carrier occurs independently. That is to say, the power pre-allocated to each carrier is independent from the power pre-allocated to each other carrier.

"Outer Loop" power control operates at the RNC 170 and acts to set a target Signal to Noise Ratio. The inner loop power control tries to maintain the target Signal to Noise Ratio set by the outer loop power control.

If user equipment 44 is close to the base station, or a carrier is experiencing a particularly advantageous radio transmission environment, the power pre-allocated to the pilot channel of that carrier will typically be quite low. The power allocated to all other channels provided on a carrier, including the uplink data channel are typically controlled in relation to the pilot channel. If a low power has been pre-allocated to the pilot channel of a carrier, a low power is required to maintain contact between that carrier and a base station. It will thus be understood that the power level pre-allocated to the pilot channel by the inner loop power control process is likely to be representative of an estimated power requirement associated with sending data on the data channel of that carrier.

The base station 22 also communicates with user equipment 44 to indicate how much resource is scheduled to each carrier. The base station 22 transmits, over radio link 200, a signal indicative of the resource scheduled to each carrier of the user equipment. That signal is received and processed by controller logic 100. Scheduled resource is usually expressed as a "serving grant" for each carrier. A serving grant is calculated as a ratio of maximum allowed transmit power on a data channel of a carrier to the power level pre-allocated to the pilot channel of that carrier by the inner loop power control process. The serving grant therefore offers an indication of maximum potential data throughput associated with sending data on the data channel of a carrier. By multiplying the serving grant of a channel by the pre-allocated power level to the pilot channel of that channel it is possible to calculate the power allocation required to meet the maximum potential data throughput on the data channel of that carrier.

It can be seen from Figure 2 that the controller logic 100 receives signals from base station 22, data store 150 and power source 180. The controller logic processes the information received from those sources and controls operation of each of the carriers 110, 120, 130, 140 in accordance with that information. In particular, the controller logic 100 is operable to allocate power to the data channels of the carriers such that power can be allocated to transmit data on uplink data channels 210, 220, 230, 240.

Before discussing the embodiments in any more detail, four methods against which the performance of the embodiments will be assessed will now be discussed. These four methods are "Fair Sharing", "Power to Fulfil Serving Grant (SG-Pwr)", "Serving Grant Proportion (SG-Por)" and "Inverse Transmit DPCCH Power (Inv-TxDPCCH)".

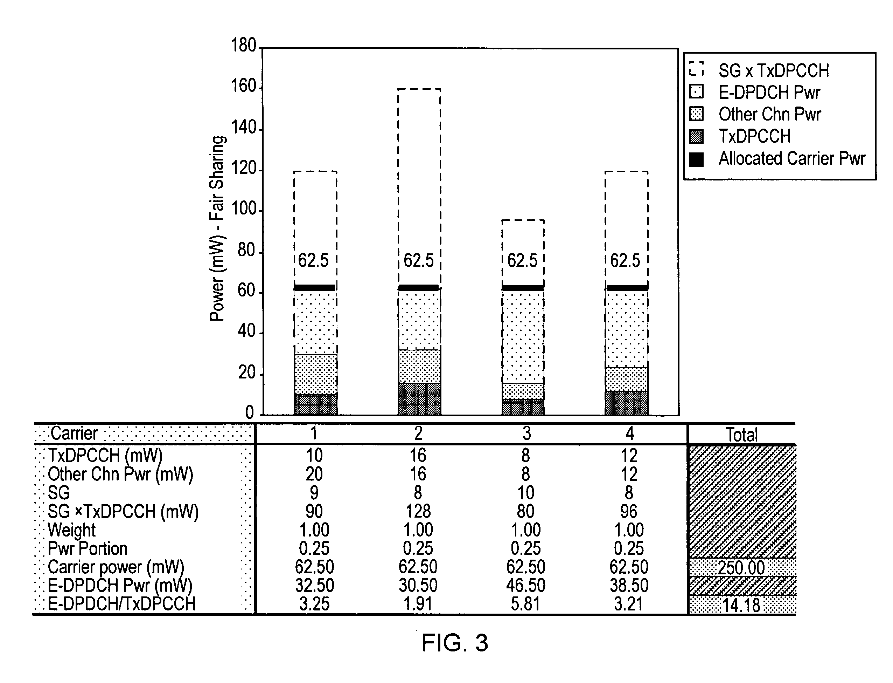

In fair sharing, as shown in Figure 3, the total UE transmit power Pₘₐₓ is divided equally among the carriers. The weights are thus equal to each other, that is W1 = W2 = W3, etc. In fair sharing neither the serving grant (i.e. potential throughput) nor the TxDPCCH (i.e. power cost) is taken into account and this will lead to non-optimal power allocation. In an example of fair sharing in a 4 carrier scenario, the total UE transmit power Pₘₐₓ is 250 mW and the Weights are set to 1 for all carriers. The total power is hence equally divided among the carriers. The ratio of E-DPDCH power / DPCCH transmit power directly maps to a potential throughput. The total E-DPDCH / DPCCH power ratio is 14.18.

In power to fulfil serving Grant (SG-Pwr), as shown in Figure 4, the weight is the power required to fulfil the Serving Grant, which can be calculated as the linear Serving Grant (SG) multiplied by the transmit DPCCH power (TxDPCCH). That is Wj = SGj x TxDPCCHj, where SGj is the linear Serving Grant for carrier j and TxDPCCHj is the DPCCH transmit power for carrier j. This method takes into account only the power cost of using each carrier. Here the carrier with the higher cost will get more power. Without taking the SG (potential throughput) into account, a carrier with high cost may have low throughput (or potential) and allocating more power to the high cost carrier may deprive the other carrier that has a higher potential. Also giving the most power to the highest cost carrier is not efficient since a high cost user requires a lot of power to release very little throughput. In an example of SG-Pwr for a 4 carrier scenario, the total UE transmit power Pₘₐₓ is 250 mW and the weights are calculated as SG x TxDPCCH for each carrier. The total E-DPDCH / TxDPCCH power ratio is 13.21.

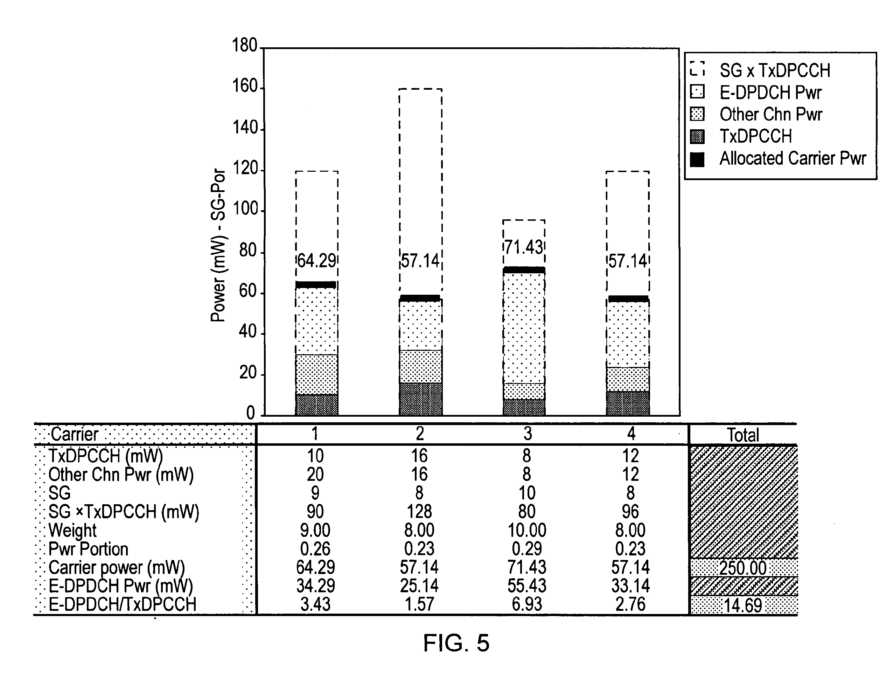

In serving grant proportion (SG-Por), as shown in Figure 5, the weight for each carrier is the linear Serving Grant (SG), i.e. Wj = SGj. Since the Serving Grant directly translates into the achievable throughput, this method takes into account the potential throughput of using each carrier. Here, the carrier with the higher potential will get more power. This method works well if the highest potential (i.e. Serving Grant) carrier has the lowest cost. However, this method does not take into consideration the power cost (i.e. TxDPCCH) in providing the throughput. In an example of SG-Por for a 4 carrier scenario, the total UE transmit power is 250 mW and the weights are the Serving Grant (SG) in each carrier. The total E-DPDCH / TxDPCCH power ratio is 14.69.

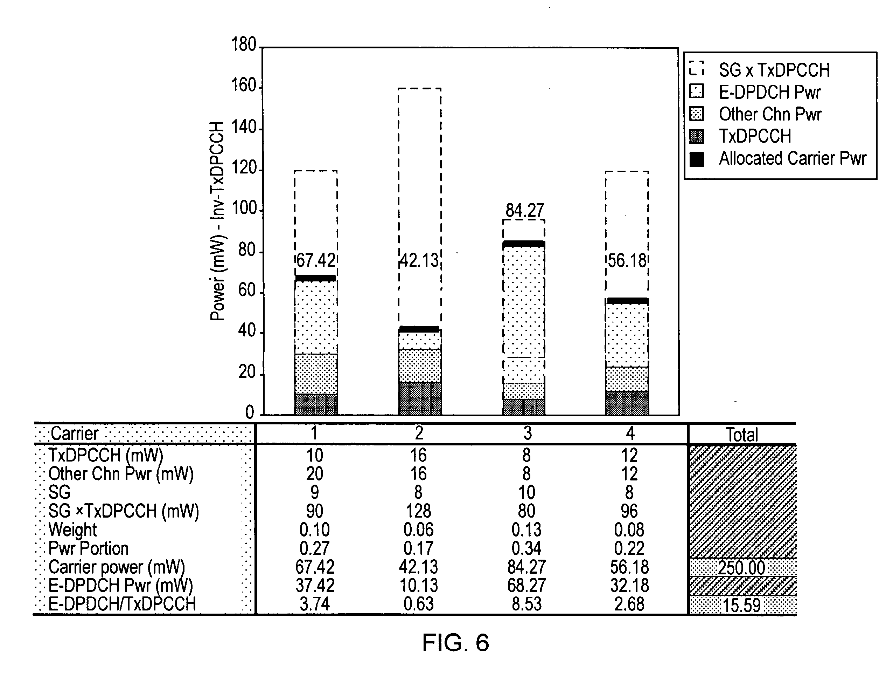

In inverse transmit DPCCH Power (Inv-TxDPCCH), as shown in Figure 6, the weight in this method is the inverse of the transmit DPCCH power (mW) in each carrier, i.e. Wj = 1 / TxDPCCHj. Since other physical channel power is directly proportional to the TxDPCCH, this method takes into account the cost of transmitting in each carrier. Here, the carrier with a lower cost will get more power. It will be appreciated that this method is the opposite of that in SG-Pwr (where higher cost gets more power). This method works well if the lowest cost carrier has the highest potential throughput (i.e. Serving Grant). However, this method does not take into consideration the potential (Serving Grant) of the carrier and this can easily lead to power wastage. Power wastage occurs where the power allocated to a carrier cannot be fully utilized due to the carrier having low Serving Grant and this will deprive other carriers of precious power. In an example of Inv-TxDPCCH for a 4 carrier scenario, the total UE transmit power is 250 mW and the weights are the inverse of the carrier's transmit DPCCH power for each carrier. The total E-DPDCH / TxDPCCH power ratio is 15.59.

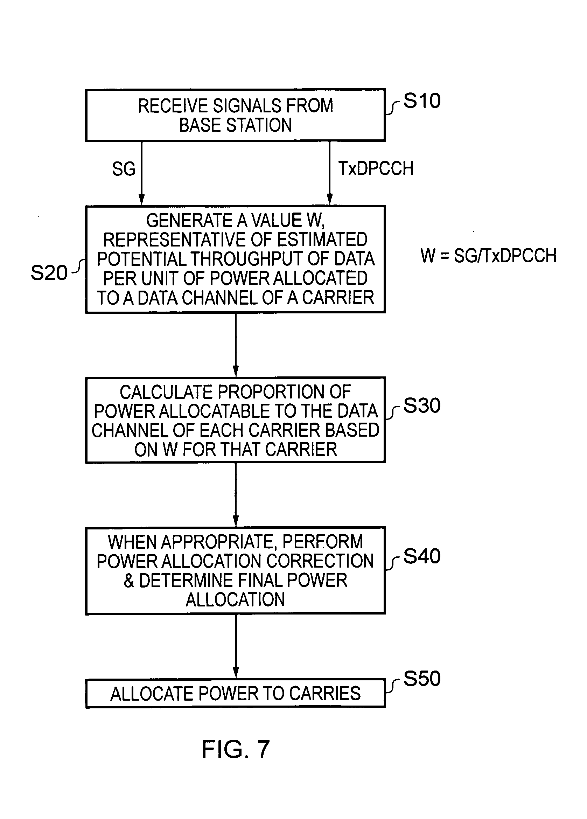

Figure 7 is a flowchart showing schematically the main processing steps of the controller logic 100 for allocating power according to one embodiment.

At step S10, at least two signals are received for each carrier is a multi-carrier network from a base station 22. The first signal comprises an indication representative of an estimated power requirement associated with sending data on a data channel of that carrier. For example, the first signal represents the transmit power of the uplink dedicated physical control channel (TxDPCCH). The second signal comprises an indication representative of an estimated data throughput associated with sending data on the data channel of that carrier. For example, the second signal represents the serving grant (SG).

In particular, consider the following example of an MC-HSUPA arrangement having four carriers. In this example, the total user equipment transmission power output is 250 milliwatts. Parameters utilised by the controller logic 100 are indicated in Table 1 below.

**Table 1**

| Carrier | 1 | 2 | 3 | 4 |
|---|---|---|---|---|
| TxDPCCH (mW) | 5 | 20 | 30 | 10 |
| Other Chn Pwr (mW) | 10 | 20 | 30 | 10 |
| SG | 10 | 10 | 30 | 20 |
| SGxTxDPCCH (mW) | 50 | 200 | 900 | 200 |

In this example, carrier 1 has the lowest power cost since TxDPCCH is only 5 milliwatts, whereas carrier 3 has the highest power cost of 30 milliwatts. Also, it can be seen that the pre-allocated power for other channels such as, for example, the control channels (DPCCH and the other channels) is lowest for carriers 1 and 4 at 10 milliwatts, whilst it is the highest for carrier 3 at 30 milliwatts. Carrier 1 also has the lowest throughput potential since the serving grant is only 10 compared to that of carrier 3 where the serving grant is 30. Carriers 1 and 2 have the same serving grant of 10 (i.e. they both have the same potential), but carrier 2 requires four times the power (i.e. 20 milliwatts x 10 = 200 milliwatts) compared to carrier 1 (i.e. 5 milliwatts x 10 = 50 milliwatts) to release the same throughput (if the serving grants are fulfilled).

At step S20, from the serving grant and the TxDPCCH, a series of weights, W, are generated, one for each carrier, as summarised in Table 2 below. The weights are calculated by dividing the serving grant by the TxDPCCH for that carrier.

**Table 2**

| | **Carrier** | | | | **Total** |
|---|---|---|---|---|---|
| | **1** | **2** | **3** | **4** | |
| **Weights** | | | | | |
| SG-Pwr | 50.00 | 200.00 | 900.00 | 200.00 | 1350.00 |
| SG-Por | 10.00 | 10.00 | 30.00 | 20.00 | 70.00 |
| Inv-TxDPCCH | 0.20 | 0.05 | 0.03 | 0.10 | 0.38 |
| ***SG*/*TxDPCCH*** | **2.00** | **0.50** | **1.00** | **2.00** | **5.50** |
| **Power Portion** | | | | | |
| SG-Pwr | 0.04 | 0.15 | 0.67 | 0.15 | 1.00 |
| SG-Por | 0.14 | 0.14 | 0.43 | 0.29 | 1.00 |
| Inv-TxDPCCH | 0.52 | 0.13 | 0.09 | 0.26 | 1.00 |
| ***SG*/*TxDPCCH*** | **0.36** | **0.09** | **0.18** | **0.36** | **1.00** |
| **Initial Allocated Power (mW)** | | | | | |
| SG-Pwr | 9.26 | 37.04 | 166.67 | 37.04 | 250.00 |
| SG-Por | 35.71 | 35.71 | 107.14 | 71.43 | 250.00 |
| Inv-TxDPCCH | 130.43 | 32.61 | 21.74 | 65.22 | 250.00 |
| ***SG*/*TxDPCCH*** | **90.91** | **22.73** | **45.45** | **90.91** | **250.00** |

Hence, it can be seen that the weight for carrier 1 is 2 (i.e. 10/5), for carrier 2 is 0.5 (i.e. 10/20), for carrier 3 is 1 (i.e. 30/30) and for carrier 4 is 2 (i.e. 20/20).

At step S30, from these weights, it is possible to normalise those values to calculate the portion of power allocatable to each carrier. Hence, as also shown in Table 2 this means that 36% of power is allocated to carriers 1 and 4, whilst 18% is allocated to carrier 3 and only 9% to carrier 2.

It is then possible to calculate the actual power allocatable to each carrier using the total power of 250 milliwatts which is allocable for transmissions. Hence, as also can be seen in Table 2, 90.91 milliwatts are each allocated to carriers 1 and 4, whilst carrier 3 is allocated 45.45 milliwatts and carrier 2 22.73 milliwatts.

If each of those initial allocated power levels are greater than the required power to carry DPCCH and the other channels, then no further power allocation steps are required and those powers can be allocated to each carrier. However, when the calculated initial power allocation is less than that required to support the DPCCH and other physical channels, then some further steps are required to perform power allocation correction and to determine the final power allocation.

Accordingly, at step S30, one of two different methods for adjusting the initial power allocation is used.

In a first method, the power for DPCCH and the other physical channels is scaled down to match the initial allocated power. However, DPCCH is the pilot channel that is used for power control, and scaling down the power of DPCCH will risk this transmission not reaching the base station 22. Also, the other physical channel powers are directly derived from DPCCH and if these powers are scaled down then they may also not reach the base station 22.

To address this problem, another method may be used in which additional power (i.e. the power which is in addition to the portion of power allocated to the carrier that is required to carry the DPCCH and other essential physical channels) is determined and this power is taken either equally or based on a weighted distribution from other carriers that do no require additional power and therefore have surplus power available. Such a scenario is illustrated in Table 3 below.

**Table 3**

| | **Carrier** | | | |
|---|---|---|---|---|
| | **1** | **2** | **3** | **4** |
| DPCCH + Other Chn Pwrs (mW) | 15 | 40 | 60 | 20 |

As shown in Table 3, the pre-allocated power to DPCCH and other channels is 15 milliwatts for carrier 1, 40 milliwatts for carrier 2, 60 milliwatts for carrier 3 and 20 milliwatts for carrier 4. As can be seen from comparing the initial allocated power of Table 2 with the pre-allocated power of Table 3, neither carriers 2 nor 3 have been allocated sufficient power to support the pre-allocated demands.

As shown in Table 4 below, the amount of additional carrier power to achieve the pre-allocated power levels is indicated.

**Table 4**

| | **Carrier** | | | | **Total** |
|---|---|---|---|---|---|
| | **1** | **2** | **3** | **4** | |
| **Additional Carrier Pwr (mW)** | | | | | |
| SG-Pwr | **5.74** | **2.96** | 0.00 | 0.00 | 8.70 |
| SG-Por | 0.00 | **4.29** | 0.00 | 0.00 | 4.29 |
| Inv-TxDPCCH | 0.00 | **7.39** | **38.26** | 0.00 | 45.65 |
| ***SG*/*TxDPCCH*** | 0.00 | **17.27** | **14.55** | **0.00** | **31.82** |
| **Power Tax (mW)** | | | | | |
| SG-Pwr | -5.74 | -2.96 | 4.35 | 4.35 | 0.00 |
| SG-Por | 1.43 | -4.29 | 1.43 | 1.43 | 0.00 |
| Inv-TxDPCCH | 22.83 | -7.39 | -38.26 | 22.83 | 0.00 |
| ***SG*/*TxDPCCH*** | **15.91** | **-17.27** | **-14.55** | **15.91** | **0.00** |
| **Adjusted Carrier Pwr (mW)** | | | | | |
| SG-Pwr | 15.00 | 40.00 | 162.31 | 32.69 | 250.00 |
| SG-Por | 34.29 | 40.00 | 105.71 | 70.00 | 250.00 |
| Inv-TxDPCCH | 107.61 | 40.00 | 60.00 | 42.39 | 250.00 |
| ***SG*/*TxDPCCH*** | **75.00** | **40.00** | **60.00** | **75.00** | **250.00** |

It can be seen that carrier 2 requires an additional 17.27 milliwatts and carrier 3 requires an additional 14.55 milliwatts. In other words, a total of 31.82 milliwatts needs to be allocated to these two carriers. Both carriers 1 and 4 have surplus power. Hence, this additional required power is taken from carriers 1 and 4 equally. In other words, carriers 1 and 4 each provide 15.91 additional milliwatts (i.e. half of 31.82 milliwatts). Had a weighting system been used and had carriers 1 and 4 had different weights, then the 31.82 milliwatts would have been divided in proportion to those weightings such that the carrier having the lower weighting would have had more power taken from it. This is because the efficiency of the carrier having a lower weighting is less than the carrier having a higher weighting.

Thereafter, the power taken from carriers 1 and 4 is allocated to carriers 2 and 3 such that carriers 2 and 3 can now adequately carry the DPCCH and other physical channels. Accordingly, the power of carriers 1 and 4 are each reduced from 90.91 milliwatts to 75 milliwatts and the powers of carriers 2 and 3 are increased from 22.27 milliwatts to 40 milliwatts and from 45.45 milliwatts to 60 milliwatts, respectively. Since carriers 2 and 3 only have sufficient power to carry DPCCH and the other physical channels, there will be no power left to carry E-DPDCH and hence these two carriers will not have any HSUPA throughput, instead only carriers 1 and 4 will have HSUPA throughput.

The power available for E-DPDCH in each carrier is the adjusted carrier power shown in Table 4 less the pre-allocated power for DPCCH and the other physical channels. However, this amount is capped by the power required to fulfil the serving grant (i.e. SG x TxDPCCH). The effective powers allocated to E-DPDCH and the corresponding E-DPDCH / DPCCH power ratios are summarised in Table 5 below.

**Table 5**

| | **Carrier** | | | | **Total** |
|---|---|---|---|---|---|
| | **1** | **2** | **3** | **4** | |
| **E-DPDCH Power (mW)** | | | | | |
| SG-Pwr | 0.00 | 0.00 | 102.31 | 12.69 | 115.00 |
| SG-Por | 19.29 | 0.00 | 45.71 | 50.00 | 115.00 |
| Inv-TxDPCCH | 50.00 | 0.00 | 0.00 | 22.39 | 72.39 |
| ***SG*/*TxDPCCH*** | **50.00** | **0.00** | **0.00** | **55.00** | **105.00** |
| **E-DPDCH/TxDPCCH power ratio** | | | | | |
| SG-Pwr | 0.00 | 0.00 | 3.41 | 1.27 | 4.68 |
| SG-Por | 3.86 | 0.00 | 1.52 | 5.00 | 10.38 |
| Inv-TxDPCCH | 10.00 | 0.00 | 0.00 | 2.24 | 12.24 |
| ***SG*/*TxDPCCH*** | **10.00** | **0.00** | **0.00** | **5.50** | **15.50** |

As can be seen, the power available for E-DPDCH in carrier 1 is 50 milliwatts. Although the adjusted allocated power for carrier 1 shown in Table 4 is 75 milliwatts and the pre-allocated power to carrier DPCCH and the other physical channels is 15 milliwatts which leaves a balance of 60 milliwatts available for E-DPDCH, the maximum power that can be given to E-DPDCH is 50 milliwatts which can be seen from Table 1 by calculating the serving grant of 10 multiplied by TxDPCCH of 5 milliwatts. Hence, the effective power allocated from E-DPDCH for carrier 1 is 50 milliwatts. In contrast, for carrier 4, the available power for E-DPDCH is 55 milliwatts (which is the adjusted carrier power of 75 milliwatts shown in Table 4 minus 20 milliwatts pre-allocated for DPCCH and other physical channels shown in Table 1 which leaves 55 milliwatts). The maximum power that can be given to E-DPDCH is 200 milliwatts (i.e. SG 20 multiplied by TxDPCCH of 10 milliwatts which equals 200 milliwatts). Hence, the 55 milliwatts available power for E-DPDCH is not limited by the serving grant.

At step S50, the powers are allocated to the carriers.

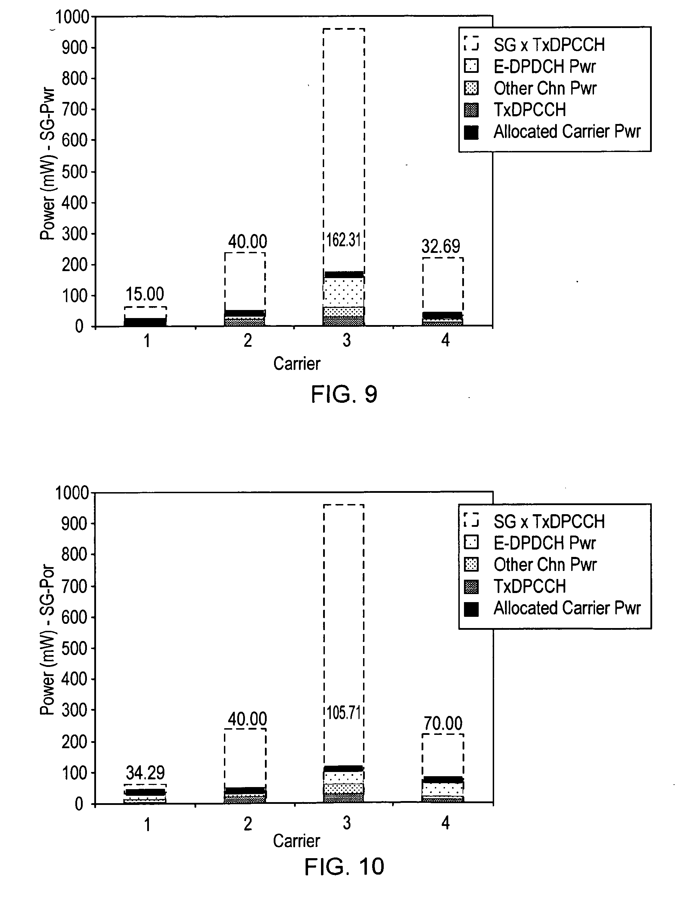

The overall power allocations for each channel in each carrier for the different techniques are illustrated in Figures 9 to 13.

First, considering the power to fulfil serving grant scheme (SG-Pwr) in Figure 9, here the highest cost carrier is Carrier 3 and it takes up 67% (see Table 2) of the total initial power. Since it is the highest cost carrier, it will require a lot of power to release each unit of throughput. As shown in Figure 9, Carrier 3 is allocated the most E-DPDCH power depriving lower cost carriers (e.g. Carrier 1 and 2) of any power for E-DPDCH. Since Carrier 3 has the highest cost, the E-DPDCH/TxDPCCH ratio achieved is only 3.41 (see Table 5). The total E-DPDCH/TxDPCCH ratio is 4.68. NOTE: The E-DPDCH / TxDPCCH ratio maps directly to HSUPA throughput.

The power allocation for the serving grant proportion scheme (SG-Por) is illustrated in Figure 10. Carrier 3 is the highest potential carrier (i.e. highest Serving Grant) and it takes up 43% of the total initial power (see Table 2). Although Carrier 3 has the highest power cost, it is allocated the most power. However, comparing to SG-Pwr, in SG-Por, Carrier 4 takes up a higher percentage of power (29% of total initial power) than that in SG-Pwr, (15% of total initial power). Carrier 4 requires less power to release a unit throughput and given it has more power in SG-Por compared to SG-Pwr, SG-Por has more than twice the total E-DPDCH/TxDPCCH ratio (10.38) of that in SG-Pwr.

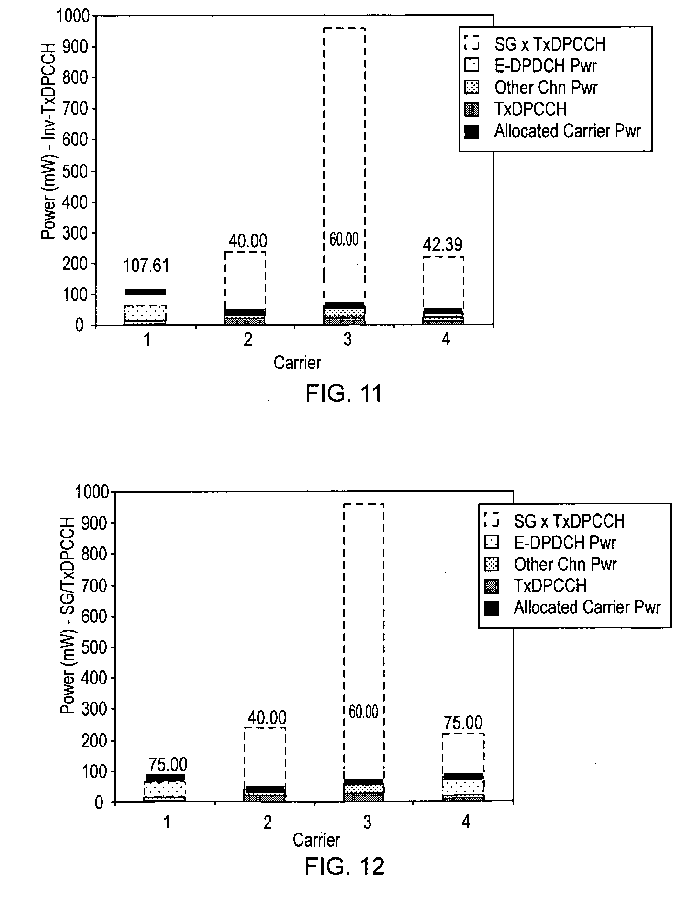

The power allocation for the inverse transmit DPCCH power scheme (Inv-TxDPCCH) is shown in Figure 11. Carrier 1 has the lowest power cost (see Table 2) and it is allocated with 52% of the total initial power. However, Carrier 1 also has the lowest potential throughput (Serving Grant of 10). As shown in Figure 3, this leads to power wastage in Carrier 1, which could have been used by the other carriers to release more throughputs. The total E-DPDCH/TxDPCCH ratio is 12.24, which is higher than SG-Por since it avoided allocating a lot of power to Carrier 3 (highest cost power).

The method SG / TxDPCCH illustrated in Figure 7 using total transmit power is shown in Figure 12. Here, Carrier 1 and Carrier 4 have the same and lowest efficiency (SG / TxDPCCH value) and both are allocated 36% of the total initial power (see Table 2). Unlike SG-Pwr and SG-Por, SG / TxDPCCH avoided allocating too much power to the high cost carrier (Carrier 2 and Carrier 3). Also, unlike Inv-TxDPCCH, it avoided allocating too much power to the lowest cost carrier, Carrier 1, which also has the lowest potential throughput thereby reducing power wastage on this carrier. By weighing the potential throughput (Serving Grant) and the power cost (TxDPCCH), SG/TxDPCCH has the highest total E-DPDCH/TxDPCCH ratio (15.50).

In an alternative arrangement, rather than using the total available transmission power to calculate the proportion of power allocatable to each carrier at step S30, instead only the remaining power (which is excess to the pre-allocated power for DPCCH and other physical channels) is used. This avoids having to perform step S40 to either scale DPCCH and the other physical channels in each carrier or to remove power from those carriers operating at a surplus. Hence, for the same scenario mentioned above the parameters in Table 1 are summarised in Table 6 below.

**Table 6**

| Carrier | 1 | 2 | 3 | 4 | **Total** |
|---|---|---|---|---|---|
| TxDPCCH (mW) | 5 | 20 | 30 | 10 | **65** |
| Other Chn Pwr (mW) | 10 | 20 | 30 | 10 | **70** |
| SG | 10 | 10 | 30 | 20 | |
| SGxTxDPCCH (mW) | 50 | 200 | 900 | 200 | |
| | | | | | **135** |

As can be seen, the total pre-allocated power for DPCCH and other physical channels is 135 milliwatts (i.e. 65 milliwatts plus 70 milliwatts). The total UE power is 250 milliwatts. Therefore, the remaining power for E-DPDCH is 250 milliwatts minus 135 milliwatts (i.e. 115 milliwatts). Hence, the surplus 115 milliwatts is allocated among the carriers for E-DPDCH as shown in Table 7 below.

**Table 7**

| Carrier | 1 | 2 | 3 | 4 | **Total** |
|---|---|---|---|---|---|
| Weight (SG/TxDPCCH) | 2 | 0.5 | 1 | 2 | **5.5** |
| Power Portion | 0.36 | 0.09 | 0.18 | 0.36 | **1** |
| Power for E-DPDCH (mW) | 41.82 | 10.45 | 20.91 | 41.82 | **115** |
| Carrier Power (mW) | 56.82 | 50.45 | 80.91 | 61.82 | **250** |
| Effective E-DPDCH Pwr (mW) | 41.82 | 10.45 | 20.91 | 41.82 | |
| E-DPDCH/TxDPCCH | 8.36 | 0.52 | 0.70 | 4.18 | **13.77** |

The weights and power portions are the same as those shown in Table 2. However, the power for E-DPDCH is 41.82 milliwatts for carrier 1 (i.e. 36% of 115 milliwatts), 10.45 milliwatts for carrier 2 and 20.91 milliwatts for carrier 3. Accordingly, the total carrier power for carrier 1 is 56.82 milliwatts (i.e. 41.82 milliwatts plus 15 milliwatts), for carrier 2 is 50.45 milliwatts (i.e. 10.46 milliwatts plus 40 milliwatts), for carrier 3 is 80.91 milliwatts (i.e. 20.91 milliwatts plus 60 milliwatts) and for carrier 4 is 61.82 milliwatts (i.e. 41.82 milliwatts plus 20 milliwatts). Hence, it can be seen that each carrier is given some power, including the highest cost carrier, carrier 3. Accordingly, the total E-DPDCH / TxDPCCH ratio is 13.77, which is lower than the ratio of 15.5 achievable when total UE transmit power is used.

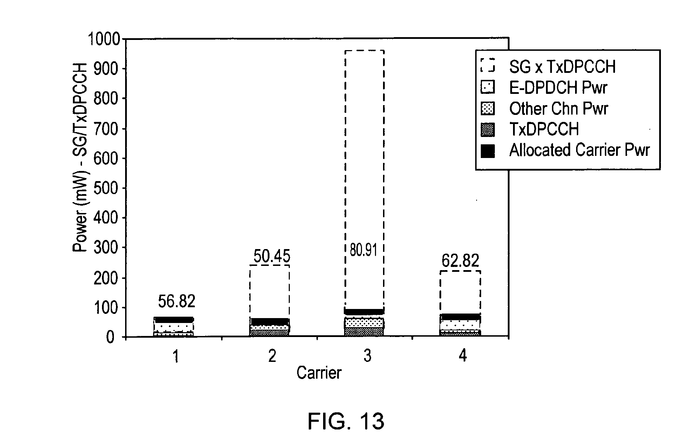

The results of this method using additional transmit power is shown in Figure 13. Here, each carrier is given some power including the highest cost carrier, Carrier 3. The total E-DPDCH / TxDPCCH ratio is 13.77, which is lower than that when total UE transmit power is used in SG / TxDPCCH.

Accordingly, it can be seen that limited power can be efficiently allocated in a DC-HSUPA/MC-HSUPA E-TFC selection and by doing so improves the uplink cell edge user equipment throughput and overall sector throughput of a DC-HSUPA/MC-HSUPA network. This approach takes into account the efficiency of a carrier (i.e. the potential throughput and power cost) in dividing the power among the carriers during and E-TFC selection in DC-HSUPA/MC-HSUPA. In doing so, excessive power allocation that consumes a lot of power with very little throughput is avoided and reduces power wastage on carriers with low power cost and low potential throughput.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of allocating power to a data channel in a multi-carrier wireless telecommunications network, each carrier comprising at least one of said data channels, said method comprising the steps of:
determining power available for allocation between each of said carriers;
receiving an indication representative of an estimated power requirement associated with sending data on said at least one data channel of each carrier;
receiving an indication representative of an estimated data throughput associated with sending data on said at least one data channel of each carrier;
generating a value representative of an estimated potential throughput of data per unit of power allocated to said at least one data channel of each carrier from a ratio of said estimated data throughput to said estimated power requirement for said at least one data channel of each carrier; and
determining a power allocation for said at least data channel of each carrier by dividing said power available across said at least data channel of each carrier in proportion to said value for that carrier.

2. The method of claim 1, wherein said step of determining comprises:
determining said power allocation for said at least one data channel of each carrier by dividing said power available across said at least one data channel of every carrier in direct proportion to said value for that carrier so that carriers having a value representative of a higher estimated potential throughput of data per unit of power allocated have a power allocation which is a greater proportion of said power available than carriers having a value representative of a lower estimated potential throughput of data per unit of power allocated.

3. The method of claim 1 or 2, wherein said power available comprises a total power output transmittable by a wireless transmission apparatus.

4. The method of any preceding claim, comprising the step of:
adjusting said power allocation for said at least one data channel of each carrier when said power allocation for said at least one data channel of that carrier is less than that a pre-allocated power which is already allocated to other channels of that carrier.

5. The method of claim 4, wherein said step of adjusting comprises:
reducing said pre-allocated power of that carrier.

6. The method of claim 4, wherein said step of adjusting comprises:
reducing said power allocation of said at least one data channel of at least one carrier whose power allocation exceeds said pre-allocated power of that carrier; and
increasing said power allocation said at least one data channel of each carrier whose power allocation is less than said pre-allocated power of that carrier.

7. The method of claim 6, wherein said step of adjusting comprises:
determining a total power allocation shortfall, said total power allocation shortfall being, for each carrier whose power allocation is less than said pre-allocated power of that carrier, a sum of each difference between said power allocation and said pre-allocated power of that carrier;
reducing said power allocation of said at least one data channel of at least one carrier whose power allocation exceeds said pre-allocated power of that carrier by a sum reduction amount which at least equals said total power allocation shortfall; and
increasing said power allocation said at least data channel of each carrier whose power allocation is less than said pre-allocated power of that carrier to at least said pre-allocated power of that carrier.

8. The method of claim 7, wherein said step of reducing comprises:
reducing said power allocation of said at least one data channel of each carrier whose power allocation exceeds said pre-allocated power of that carrier based on a predetermined weighting of each carrier.

9. The method of claim 8, wherein said weighting of each carrier is equal.

10. The method of claim 8, wherein said weighting of each carrier is based on said value for that carrier so that carriers having a value representative of a lower estimated potential throughput of data per unit of power allocated have a weighting which is higher than carriers having a value representative of a higher estimated potential throughput of data per unit of power allocated so that carriers having said value representative of said lower estimated potential throughput of data per unit of power have their power allocation reduced in preference to carriers having said value representative of said higher estimated potential throughput of data per unit of power.

11. The method of claim 1 or 2, wherein said power available comprises an excess power available for transmitting user data over said data channels which is not already pre-allocated to other channels of each carrier.

12. The method of any preceding claim, wherein each carrier comprises a pilot channel and said indication representative of an estimated power requirement associated with sending data on said data channel of that carrier is determined from a power level pre-allocated to said pilot channel.

13. The method of any preceding claim, wherein said indication representative of an estimated data throughput associated with sending data on said at least one data channel of each carrier comprises a serving grant.

14. A network apparatus operable to allocate power to a data channel in a multi-carrier wireless telecommunications network, each carrier comprising at least one of said data channels, said apparatus comprising:
a source of power available for allocation between each of said carriers;
monitoring logic operable to receive an indication representative of an estimated power requirement associated with sending data on said at least one data channel of each carrier and to receive an indication representative of an estimated data throughput associated with sending data on said at least one data channel of each carrier;
calculation logic operable to generate a value representative of an estimated potential throughput of data per unit of power allocated to said at least one data channel of each carrier from a ratio of said estimated data throughput to said estimated power requirement for said at least one data channel of each carrier; and
implementation logic operable to determine a power allocation for said at least data channel of each carrier by dividing said power available across said at least data channel of each carrier in proportion to said value for that carrier.

15. A computer program product operable, when executed on a computer, to perform the method steps any one of claims 1 to 13.

## Amended claims

### Amended claims in accordance with Rule 137(2) EPC.

**1.** A method of allocating power to a data channel in a multi-carrier wireless telecommunications network (10), each carrier comprising at least one of said data channels, said method comprising the steps of:
determining power available for allocation between each of said carriers;
receiving (S10) a signal providing an indication representative of an estimated power requirement associated with sending data on said at least one data channel of each carrier;
receiving (S10) a signal providing an indication representative of an estimated data throughput associated with sending data on said at least one data channel of each carrier;
generating (S20) a value representative of an estimated potential throughput of data per unit of power allocated to said at least one data channel of each carrier from a ratio of said estimated data throughput to said estimated power requirement for said at least one data channel of each carrier; and
determining (S30) a power allocation for said at least data channel of each carrier by dividing said power available across said at least data channel of each carrier in proportion to said value for said carrier.

**2.** The method of claim 1, wherein said step of determining comprises:
determining said power allocation for said at least one data channel of each carrier by dividing said power available across said at least one data channel of every carrier in direct proportion to said value for that carrier so that carriers having a value representative of a higher estimated potential throughput of data per unit of power allocated have a power allocation which is a greater proportion of said power available than carriers having a value representative of a lower estimated potential throughput of data per unit of power allocated.

**3.** The method of claim 1 or 2, wherein said power available comprises a total power output transmittable by a wireless transmission apparatus.

**4.** The method of any preceding claim, comprising the step of:
adjusting (S40) said power allocation for said at least one data channel of each carrier when said power allocation for said at least one data channel of that carrier is less than that a pre-allocated power which is already allocated to other channels of that carrier.

**5.** The method of claim 4, wherein said step of adjusting comprises:
reducing said pre-allocated power of that carrier.

**6.** The method of claim 4, wherein said step of adjusting comprises:
reducing said power allocation of said at least one data channel of at least one carrier whose power allocation exceeds said pre-allocated power of that carrier; and
increasing said power allocation said at least one data channel of each carrier whose power allocation is less than said pre-allocated power of that carrier.

**7.** The method of claim 6, wherein said step of adjusting comprises:
determining a total power allocation shortfall, said total power allocation shortfall being, for each carrier whose power allocation is less than said pre-allocated power of that carrier, a sum of each difference between said power allocation and said pre-allocated power of that carrier;
reducing said power allocation of said at least one data channel of at least one carrier whose power allocation exceeds said pre-allocated power of that carrier by a sum reduction amount which at least equals said total power allocation shortfall; and
increasing said power allocation said at least data channel of each carrier whose power allocation is less than said pre-allocated power of that carrier to at least said pre-allocated power of that carrier.

**8.** The method of claim 7, wherein said step of reducing comprises:
reducing said power allocation of said at least one data channel of each carrier whose power allocation exceeds said pre-allocated power of that carrier based on a predetermined weighting of each carrier.

**9.** The method of claim 8, wherein said weighting of each carrier is equal.

**10.** The method of claim 8, wherein said weighting of each carrier is based on said value for that carrier so that carriers having a value representative of a lower estimated potential throughput of data per unit of power allocated have a weighting which is higher than carriers having a value representative of a higher estimated potential throughput of data per unit of power allocated so that carriers having said value representative of said lower estimated potential throughput of data per unit of power have their power allocation reduced in preference to carriers having said value representative of said higher estimated potential throughput of data per unit of power.

**11.** The method of claim 1 or 2, wherein said power available comprises an excess power available for transmitting user data over said data channels which is not already pre-allocated to other channels of each carrier.

**12.** The method of any preceding claim, wherein each carrier comprises a pilot channel and said signal providing said indication representative of an estimated power requirement associated with sending data on said data channel of that carrier is determined from a power level pre-allocated to said pilot channel.

**13.** The method of any preceding claim, wherein said signal providing said indication representative of an estimated data throughput associated with sending data on said at least one data channel of each carrier comprises a serving grant.

**14.** A network apparatus (44) operable to allocate power to a data channel in a multi-carrier wireless telecommunications network (10), each carrier comprising at least one of said data channels, said apparatus comprising:
a source of power (180) available for allocation between each of said carriers;
monitoring logic (430) operable to receive a signal providing said an indication representative of an estimated power requirement associated with sending data on said at least one data channel of each carrier and to receive a signal providing said an indication representative of an estimated data throughput associated with sending data on said at least one data channel of each carrier;
calculation logic (440) operable to generate a value representative of an estimated potential throughput of data per unit of power allocated to said at least one data channel of each carrier from a ratio of said estimated data throughput to said estimated power requirement for said at least one data channel of each carrier; and
implementation logic (450) operable to determine a power allocation for said at least data channel of each carrier by dividing said power available across said at least data channel of each carrier in proportion to said value for said carrier.

**15.** A computer program product operable, when executed on a computer, to perform the method steps any one of claims 1 to 13.
